# EUROPÄISCHE PATENTSCHRIFT

(11) **EP 1 613 848 B1**
(45) Veröffentlichungstag und Bekanntmachung des Hinweises auf die Patenterteilung: **12.08.2009**
(21) Anmeldenummer: 04722260.9
(22) Anmeldetag: 22.03.2004
(51) Int. Cl.: F02B 29/04, F01P 3/18

(54) **BEFESTIGUNGSEINRICHTUNG FÜR EINEN WÄRMEÜBERTRAGER UND WARMEÜBERTRAGERBEFESTIGUNG**
FIXING DEVICE FOR A HEAT EXCHANGER AND THE FIXATION THEREOF
DISPOSITIF DE FIXATION DESTINE A UN ECHANGEUR THERMIQUE ET FIXATION D'ECHANGEUR THERMIQUE

(30) Priorität: 02.04.2003 DE 10315095
(43) Veröffentlichungstag der Anmeldung: 11.01.2006
(73) Patentinhaber: Behr GmbH & Co. KG, 70469 Stuttgart (DE)
(72) Erfinder: SCHMIDGALL, Stefan, 70378 Stuttgart (DE)
(74) Vertreter: Grauel, Andreas
(86) Internationale Anmeldenummer: PCT/EP2004/002966
(87) Internationale Veröffentlichungsnummer: WO 2004/088107

(56) Entgegenhaltungen:
- EP-A- 0 693 665
- EP-A- 1 167 105
- WO-A-02/12817
- DE-A- 3 922 814
- DE-A- 4 244 039
- DE-A- 19 953 787

## Beschreibung

Die vorliegende Erfindung betrifft eine Befestigungseinrichtung für einen ersten Wärmeübertrager unterhalb eines zweiten Wärmeübertragers, wie sie von Fahrzeugen her bekannt ist, sowie eine Wärmeübertragerbefestigung unter Verwendung derartiger Befestigungseinrichtungen.

Es ist von Fahrzeugen her bekannt, neben dem Kühlmittelkühler einen gesonderten Ladeluftkühler vorzusehen. Dieser Ladeluftkühler wird, ausreichenden Bauraum vorausgesetzt, häufig vertikal unterhalb des Kühlmittelkühlers angeordnet. Hierzu sind Befestigungseinrichtungen bekannt, die seitlich an dem Kühler angeordnet sind. Dabei ist es beispielsweise bekannt, seitlich am Kühlmittelkühler Haltebleche anzuordnen, die nach unten über den unteren Rand des Kühlmittelkühlers hinweg abragen. Derartige Haltebleche erstrecken sich dabei häufig bis ca. über 2/3 der vertikalen Erstreckung des Kühlmittelkühlers. An einem solchen Halteblech kann dann, insbesondere über seine gesamte Bauhöhe hinweg, der Ladeluftkühler beispielsweise mit mehreren Befestigungsschrauben gehalten werden.

Derartige Befestigungseinrichtungen werden erforderlich erachtet, da auf den Ladeluftkühler erhebliche Kräfte einwirken. Zum einen sind dies die Kräfte, die aufgrund des in den Ladeluftkühler einströmenden Fluids von den Fluidleitungen auf den Ladeluftkühler eingeleitet werden. Zum anderen sind es die Kräfte, die entstehen, wenn das Fahrzeug beschleunigt oder verzögert wird. Da sich diese Kräfte insbesondere im Bereich von mehreren hundert N bewegen und auch in einer großen Anzahl von Lastspielen immer wieder auf die Befestigung einwirken, wird eine solch aufwendige Kühlerbefestigung für erforderlich gehalten.

Aus der DE 39 22 814 A1 ist eine Halterung für den Kühler eines flüssigkeitsgekühlten Fahrzeugmotors bekannt. Am Halte- und Führungsrahmen können ferner Einrichtungen für die Befestigung eines zu einer Klimaanlage des Fahrzeugs gehörenden Kondensators und/ oder eines Ölkühlers einstückig angeformt sein.

Derart aufwendige Kühlerbefestigungen haben den Vorteil entsprechend ausreichender und sicherer Standzeit, jedoch den Nachteil, dass sie einen erheblichen Befestigungsaufwand bei der Montage bedingen und gleichzeitig ein hohes Eigengewicht aufweisen. Diese hohe Eigengewicht ist zum einen deshalb unerwünscht, weil sie das Gesamtgewicht des Fahrzeuges und somit dessen Benzinverbrauch erhöhen und zum anderen deshalb, weil dieses Gewicht mit einem entsprechenden Hebel auch die Befestigung des Kühlmittelkühlers am Fahrzeug belastet. Der Erfindung liegt daher die Aufgabe zugrunde, eine möglichst leichte, einfach zu montierende Befestigungseinrichtung zu schaffen, die zur Verwendung als Wärmeübertragerbefestigung für die Verbindung zwischen einem ersten und einem zweiten Wärmeübertrager geeignet und gegebenenfalls selbst möglichst leicht ist.

Diese Aufgabe wird durch eine Befestigungseinrichtung gemäß der Erfindung gelöst, wobei erfindungsgemäße Wärmeübertragerbefestigungen unter Verwendung der Befestigungseinrichtung ausgebildet sind.

Die der Erfindung zugrunde liegende Aufgabe wird durch eine Befestigungseinrichtung gemäß dem Anspruch 1 und durch eine Wärmeübertragerbefestigung gemäß dem weiteren unabhängigen Anspruch gelöst.

Ein erster Wärmeübertrager ist unterhalb eines zweiten Wärmeübertragers mittels Befestigungseinrichtungen befestigt. Hierzu weist der erste Wärmeübertrager Befestigungsmittel auf, mittels derer er unterhalb des zweiten Wärmeübertragersgehalten wird. Der zweite Wärmeübertrager weist eine entsprechend gestaltete Aufnahme aus. Gemäß der Erfindung ist im unteren Bereich des zweiten Wärmeübertragers wenigstens eine Aufnahme ausgebildet, wobei im oberen Bereich des ersten Wärmeübertragers an entsprechender Stelle ein Befestigungsmittel ausgebildet ist. Durch Herstellen einer Verbindung zwischen Aufnahme und Befestigungsmittel wird der erste Wärmeübertrager an dem zweiten Wärmeübertrager aufgehängt.

Eine solche Befestigungseinrichtung ermöglicht ein Befestigen des ersten Wärmeübertragers direkt am zweiten Wärmeübertrager ohne Verwendung einer seitlich angeordneten, eine erhebliche Bauhöhe aufweisenden Hilfskonstruktion, wie sie bei der Verwendung einer Befestigungsleiste auftritt. Auch sind nicht mehrere Befestigungen der Befestigungsleiste am ersten Wärmeübertrager und am zweiten Wärmeübertrager erforderlich.

Gemäß der Erfindung weist eine Wärmeübertragerbefestigung für einen ersten Wärmeübertrager wenigstens eine Befestigungseinrichtung gemäß der Erfindung auf. Es ist gemäß der Erfindung vorgesehen, dass die Kühlerbefestigung dadurch gebildet ist, dass bei erstem und zweitem Wärmeübertrager jeweils an beiden horizontalen Seitenbereichen die entsprechenden Elemente je einer Befestigungseinrichtung ausgebildet sind.

Eine solche Wärmeübertragerbefestigung mit zwei erfindungsgemäßen Befestigungseinrichtungen, die jeweils im Seitenbereich der Wärmeübertrager ausgebildet sind, bildet eine einfache, aber dennoch dauerhaft stabile Anordnung des ersten Wärmeübertragers am zweiten Wärmeübertrager.

Gemäß der Erfindung ist eine der beiden Befestigungseinrichtungen ein Festlager. Die andere Befestigungseinrichtung weist ein Spiel auf, das eine Relativbewegung des ersten Wärmeübertragers bezüglich des zweiten Wärmeübertragers in der horizontalen Richtung ermöglicht. Diese Maßnahme ermöglicht einen Längenausgleich zwischen dem ersten und dem zweiten Wärmeübertrager, der aufgrund der unterschiedlichen Erwärmung und der damit unterschiedlichen Längenausdehnung in Querrichtung erforderlich ist. Dabei weist wenigstens eine der beiden Befestigungseinrichtungen, insbesondere aber zumindest die eine Relativbewegung in Querrichtung ermöglichende Befestigungseinrichtung ein Wirkmittel auf, das eine in Vertikalrichtung wirkende Vorspannung zwischen Aufnahme und Befestigungsmittel erzeugt. Bei dem Wirkmittel handelt es sich dabei insbesondere um ein Blattfederelement. Durch das Wirkmittel wird gemäß vorteilhafter Ausgestaltung die Lage des ersten zum zweiten Wärmeübertrager in Vertikalrichtung gesichert, so dass die auftretenden Schwingungsanregungen abgefedert werden, ohne dass ein Verschleiß an den Bauteilen entsteht.

Die Aufnahme besteht erfindungsgemäß aus zwei als in horizontaler Richtung verlaufenden Langlöchern ausgebildeten Ösen. Die Ösen weisen eine Höhe auf, die in etwa dem Durchmesser des Steckbolzens entspricht und sich in horizontaler Richtung in einer für den Spielausgleich der Längenausdehnung erforderlichen Weise erstreckt.

Es entspricht einer vorteilhaften Ausgestaltung der Erfindung, wenn die Aufnahme des zweiten Wärmeübertragers zum Aufnehmen eines Steckbolzens ausgebildet ist und das Befestigungsmittel des ersten Wärmeübertragers ebenfalls zum Aufnehmen eines Steckbolzens geeignet ist. Die Verbindung wird gemäß dieser Ausgestaltung in vorteilhafter Weise durch das Durchführen eines Steckbolzens durch die zueinander ausgerichteten Aufnahme- und Befestigungsmittel erzeugt. In weiterführender Ausgestaltung kann dabei insbesondere vorgesehen sein, dass der Steckbolzen in seiner axialen Erstreckung ein Schraubgewinde aufweist, das in ein entsprechendes Gegengewinde eingreift und ein Lösen der Verbindung verhindert. Dabei ist das Gegengewinde entweder an einem der beiden Mittel aus Aufnahme und Befestigungsmittel oder aber vorzugsweise an einer festlegbaren Haltemutter ausgebildet. Die Haltemutter wird insbesondere im Bereich der Befestigungsmittel des ersten Wärmeübertragers oder der Aufnahme des zweiten Wärmeübertragers gehalten. Es entspricht weiterer vorteilhafter Ausgestaltung des Befestigungsbolzens, wenn er eine im Querschnitt kreisförmige Grundform aufweist, jedoch an zwei einander gegenüberliegenden Seiten abgeflacht ist. Durch diese Maßnahme oder eine entsprechende äquivalente Maßnahme oder andere Formgebung, kann die Drehlage des Steckbolzens um seine eigene Achse herum festgelegt werden.

Der Vorteil der Ausgestaltung einer Aufnahme und eines Befestigungsmittels, die durch einen gemeinsamen Steckbolzen durchsetzt werden, ist darin zu sehen, dass durch diese Maßnahme die Verbindung zwischen erstem und zweitem Wärmeübertrager in einfacher Weise herstellbar wird. Das Herstellen der Steckverbindung ist zum Beispiel durch Fertigungseinrichtungen oder aber durch Produktionspersonal einfach vorzunehmen, wobei ein Ausrichten von den Elementen der Befestigungseinrichtung zueinander durch geeignete Werkzeuge erfolgen kann.

Es entspricht einer vorteilhaften Ausgestaltung einer Befestigungseinrichtung, dass diese ein Wirkmittel aufweist, das eine in Vertikalrichtung wirkende Vorspannung zwischen Aufnahme und Befestigungsmittel erzeugt. Gemäß bevorzugter Ausgestaltung handelt es sich bei dem Wirkmittel insbesondere um einen auf einen Steckbolzen oder ein äquivalentes Mittel einwirkenden Kraftspeicher. Dieser Kraftspeicher kann insbesondere als Feder, vorzugsweise als eine einseitig gehaltene, sich mit ihrem freien Ende am Steckbolzen abstützende Blattfeder ausgebildet sein.

Durch das Vorsehen des Wirkmittel werden Spiele in Vertikalrichtung, die allein schon aufgrund der Fertigungstoleranzen vorhanden sind, ausgeglichen. Auf diese Weise wird eine unerwünschte, störende Geräuschentwicklung im Bereich der Befestigungsstelle in ebenso vorteilhafter Weise vermieden wie ein aufgrund der in Vertikalrichtung eingeleiteten Störungsanregungen erzeugter Abrieb. Ein derartiger Abrieb würde in der Dauerbelastung zu unerwünschten Schwächungen der Verbindungsstelle führen, welche dann ein zuverlässiges Aufrechterhalten der Verbindung nicht mehr gewährleisten würden. Durch die erfindungsgemäßen Maßnahmen wird das Auftreten von Verschleiß im Bereich der Befestigungseinrichtung vermieden. Das Vermeiden dieses Verschleißes führt in besonderer Weise dazu, dass die Befestigungseinrichtung auch zur Verwendung an der vorgesehenen Verbindung zwischen erstem und zweitem Wärmeübertrager geeignet ist.

Gemäß einer vorteilhaften Ausgestaltung der erfindungsgemäßen Befestigungseinrichtung ist vorgesehen, dass wenigstens ein Teil und insbesondere alle der Bauteile aus Aufnahme, Befestigungsmittel, Steckbolzen, Haltemutter und Kraftspeicher zumindest überwiegend aus einem Kunststoff bestehen. Das Verwenden von Kunststoff zur Ausbildung der Befestigungseinrichtung hat den Vorteil, dass das Material an sich leicht ist. Auch die Standfestigkeit des Materiales kann ausreichend gewählt sein, was insbesondere auch durch die Verwendung von Kunststoffverbundwerkstoffen erfolgen kann. Darüber hinaus eignen sich Kunststoff und Kunststoffverbundwerkstoffe insbesondere zur günstigen Verarbeitung in Verbindung mit der übrigen Herstellung des ersten und zweiten Wärmeübertragers sowie deren Bauelementen. Insbesondere der Kraftspeicher, beispielsweise eine Blattfeder, kann hiervon jedoch eine Ausnahme darstellen, wobei es sich bei diesem Bauteil vorzugsweise um einen metallischen Werkstoff handelt, der insbesondere während des Spritzgießens an entsprechenden Bauteilen mit eingebettet sein kann.

Im Übrigen wird die Erfindung nachfolgend anhand des in der Zeichnung dargestellten Ausführungsbeispiels näher erläutert; dabei zeigt:
- Fig. 1: eine erfindungsgemäße Wärmeübertragerbefestigung ei- nes Ladeluftkühlers an einem Kühlmittelkühler;
- Fig. 2: einen in der Aufnahme des Kühlmittelkühlers angeord- neten Steckbolzen;
- Fig. 3: die dreidimensionale Darstellung eines Steckbolzens und
- Fig. 4a und b: Schnittdarstellungen durch eine erfindungsgemäße Be- festigungseinrichtung.

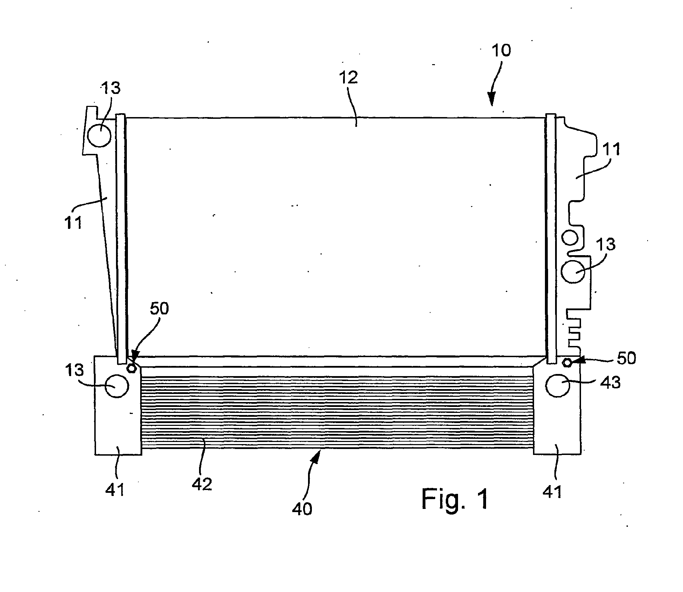

Die Fig. 1 zeigt in der Ansicht in Fahrtrichtung eines Fahrzeugs im Einbauzustand gesehen, einen Kühlmittelkühler 10 und einen unterhalb des Kühlmittelkühlers angeordneten Ladeluftkühler 40. Der Ladeluftkühler 40 ist also vertikal unterhalb des Kühlmittelkühlers 10 angeordnet. Er ist dabei über zwei seitlich angeordnete Befestigungen 50 am Kühlmittelkühler 10 gehalten. Die Seiten des Kühlers sind dabei immer durch Kühlerkästen 11 bzw. 41 gebildet, zwischen denen sich Kühlerkörper 12 bzw. 42 erstrecken. Die Kühlerkästen 11 und 41 von Kühlmittelkühler 10 bzw. Ladeluftkühler 40 weisen dabei jeweils Anschlussstellen 13 bzw. 43 zum Zu- und Abführen von Kühlmedium des entsprechenden Kühlkreislaufes auf.

In horizontaler Richtung zwischen den Kühlerkästen 11 bzw. 41 erstrecken sich die entsprechenden Kühlerkörper 12 und 42. Die Kühlerkörper sind im Wesentlichen parallel zueinander ausgerichtete Leitungsbündel, die vom Kühlmedium, des jeweiligen Kühlkreislaufes durchströmt werden und die zur guten Wärmeabfuhr eine möglichst große Oberfläche zur durchströmenden Kühlluft aufweisen. Die Erstreckungsrichtung der Kühlerkörper ist im Wesentlichen die Horizontalrichtung. Die Durchströmrichtung der Kühlluft durch die beiden Kühler ist die Richtung senkrecht zur Blattebene.

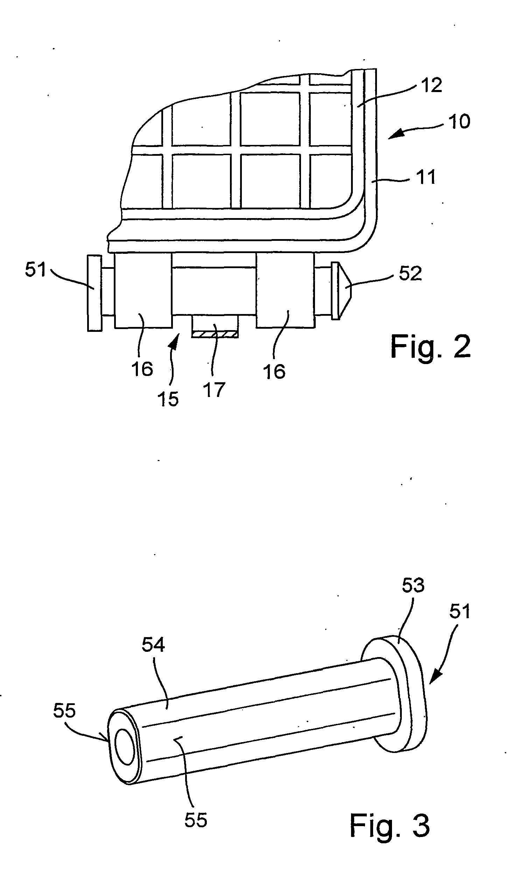

Die Fig. 2 zeigt die Abbildung der Aufnahme 15 im unteren Bereich des Kühlmittelkühlers 10, dessen Kühlerkasten 11 und Kühlerkörper 12 in der teilgeschnittenen Darstellung noch zu erkennen sind. Die Aufnahme 15 besteht aus zwei als in horizontaler Richtung verlaufenden Langlöchern ausgebildeten Ösen 16. Die Ösen 16 weisen eine Höhe auf, die in etwa dem Durchmesser des Steckbolzens 51, der in vergrößerter Darstellung in Fig. 3 gezeigt ist, entspricht und sich in horizontaler Richtung in einer für den Spielausgleich der Längenausdehnung erforderlichen Weise erstreckt, so dass der Steckbolzen gegenüber dem Kühlmittelkühler 10 in horizontaler Richtung um dieses Maß beweglich gehalten ist. Eine Blattfeder 17 ragt parallel zur Langlocherstreckung ab und beaufschlagt den Steckbolzen 51 in vertikaler Richtung so, dass dieser an einer das Langloch der Öse 16 begrenzenden Kante permanent anliegt, auch wenn dynamische Kräfte in Vertikalrichtung auf den Steckbolzen 51 einwirken. In der Darstellung der Fig. 2 sind die Teile der Aufnahme der Übersichtlichkeit halber nicht dargestellt. Jedoch ist die Haltemutter 52, die mit dem Steckbolzen 51 verschraubbar ist und am Kühlmittelkühler wenigstens mittelbar festlegbar ist, noch gezeigt, und zwar in einer Stellung, in der sie sich im Verbindungseingriff mit dem Steckbolzen 51 befindet.

Die Fig. 3 zeigt in vergrößerter Darstellung den Steckbolzen 51, der eine Grundplatte 53 sowie einen im Wesentlichen zylindrischen Schaft 54 aufweist. Der Schaft 54 weist beidseitig je eine abgeflachte Anschlagfläche 55 auf, wobei die Anschlagflächen beiderseits des Schaftes 54 parallel zueinander ausgerichtet sind. Die Anschlagflächen dienen zur Anlage des Schaftes an entsprechenden Seitenflächen der Ösen 16 sowie der entsprechenden Mittel der Befestigungsmittel des Ladeluftkühlers, so dass eine verdrehsichere Halterung des Steckbolzens 51 gegeben ist. Anstelle der zweifach abgeflachten, im Wesentlichen zylindrischen Form kann auch eine andere Ausgestaltung, beispielsweise eine andere vieleckige Form gewählt werden, die dem gleichen Zweck dient.

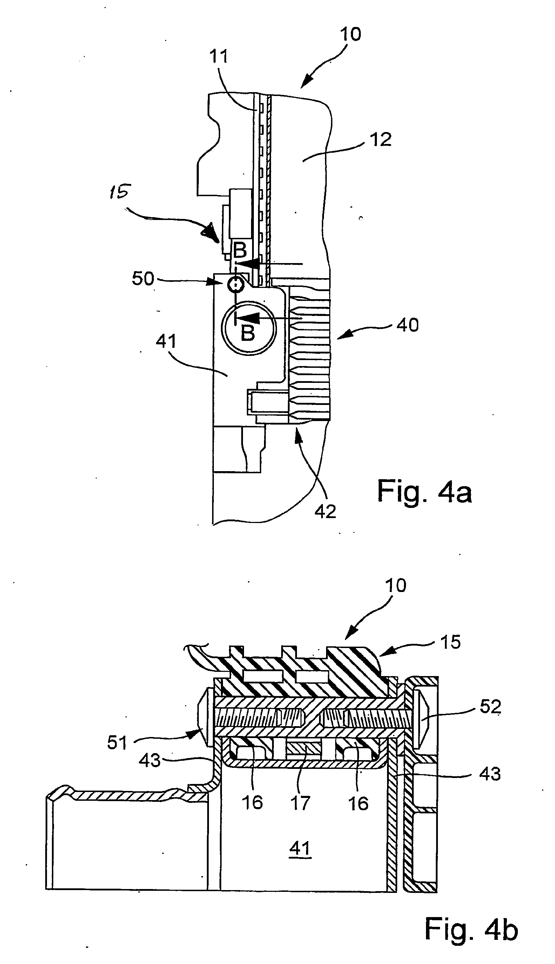

Die Fig. 4a und 4b zeigen jeweils Schnittdarstellungen durch eine erfindungsgemäße Befestigungseinrichtung, wobei die Fig. 4b den Detailausschnitt des Schnittes B-B der Fig. 4a zeigt. Die Fig. 4a zeigt den Kühlmittelkühler 10 in einer Teilansicht zusammen mit dem seitlichen Kühlerkasten 11 sowie dem Kühlerkörper 12. Im unteren, seitlichen Bereich des Kühlerkastens 11 ist die Aufnahme 15 ausgebildet, die Teil der Befestigung 50 ist. Unterhalb des Kühlmittelkühlers 10 ist der Ladeluftkühler 40 dargestellt, der ebenfalls einen Kühlerkasten 41 und den Kühlerkörper 42 aufweist.

Die Fig. 4b lässt einen Schnitt durch den Kühlerkasten 41 des Ladeluftkühlers 40 erkennen. Der Kühlerkörper 42 weist Laschen 43 auf, die Bohrungen besitzen, durch die der Steckbolzen 51 hindurchgeführt werden kann. Darüber hinaus durchsetzt der Steckbolzen die Ösen 16 der Aufnahme 15 des Kühlmittelkühlers 10, wobei die Blattfeder 17 den Steckbolzen 51 in vertikaler Richtung beaufschlagt und in definierter Lage hält.

Hierdurch wird eine Befestigungseinrichtung 50 geschaffen, wie sie jeweils beidseitig des Ladeluftkühlers und Kühlmittelkühlers ausgebildet sein kann und diese beiden dann in entsprechender Lage miteinander verbinden und eine Kühlerbefestigung darstellen, die ausreicht, um dauerhaft den Ladeluftkühler am Kühlmittelkühler zu befestigen.

Die Erfindung wurde am Beispiel einer Befestigungseinrichtung für einen Ladeluftkühler an einem Kühlmittelkühler näher beschrieben. Eine erfindungsgemäße Befestigungseinrichtung ist jedoch ebenso gut für andere Anwendungen, insbesondere andere Wärmeübertrager, einsetzbar, ohne daß dabei der Rahmen der vorliegenden Erfindung, der durch die Ansprüche definiert wird, verlassen wird.

## Patentansprüche

1. Befestigungseinrichtung (50) für einen ersten Wärmeübertrager (40), insbesondere Ladeluftkühler, unterhalb eines zweiten Wärmeübertragers, insbesondere Kühlmittelkühlers (10), wobei der erste Wärmeübertrager (40) mit Befestigungsmitteln (50) unterhalb des zweiten Wärmeübertragers (10) gehalten wird, wobei der zweite Wärmeübertrager (10) hierzu eine entsprechende Aufnahme (15) aufweist, wobei im unteren Bereich des zweiten Wärmeübertragers (10) eine Aufnahme (15) ausgebildet ist, wobei im oberen Bereich des ersten Wärmeübertragers (40) Befestigungsmittel (50) ausgebildet sind, wobei durch Herstellen einer Verbindung zwischen Aufnahme (15) und Befestigungsmittel (50) der erste Wärmeübertrager (40) an den zweiten Wärmeübertrager (10) angehängt ist, wobei am ersten Wärmeübertrager (40) und am zweiten Wärmeübertrager (10) an jeweils beiden horizontalen Seitenbereichen entsprechende Elemente je einer Befestigungseinrichtung (50) ausgebildet sind und so je eine Befestigungseinrichtung (50) bilden, wobei eine der beiden Befestigungseinrichtungen (50) ein Festlager ist und die andere Befestigungseinrichtung (50) eine Relativbewegung des ersten Wärmeübertragers (40) bezüglich des zweiten Wärmeübertragers (10) in horizontaler Richtung ermöglicht, **dadurch gekennzeichnet, dass** die Aufnahme (15) aus zwei als in horizontaler Richtung verlaufenden Langlöchern ausgebildeten Ösen (16) besteht, wobei die Ösen (16) eine Höhe aufweisen, die in etwa dem Durchmesser eines Steckbolzens (51) entsprechen und sich in horizontaler Richtung in eines für einen Spielausgleich einer Längsausdehnung erforderlichen Weise erstreckt.

2. Befestigungseinrichtung nach einem der vorangegangenen Ansprüche,
**dadurch gekennzeichnet,**
**dass** die Aufnahme (15) des zweiten Wärmeübertragers (10) zum Aufnehmen eines Steckbolzens (51) ausgebildet ist, wobei die Befestigungsmittel (50) des ersten Wärmeübertragers (40) ebenfalls zum Aufnehmen eines Steckbolzens (51) geeignet sind, wobei die Verbindung durch das Durchführen eines Steckbolzens (51) durch zueinander ausgerichtete Aufnahme (15) und Befestigungsmittel (50) erzeugbar ist.

3. Befestigungseinrichtung nach Anspruch 2,
**dadurch gekennzeichnet,**
**dass** der Steckbolzen (51) in seiner axialen Erstreckung ein Schraubgewinde aufweist, das in ein entsprechendes Gegengewinde eingreift und ein Lösen der Verbindung verhindert, wobei das Gegengewinde insbesondere in einer Haltemutter (52) ausgebildet ist, welche vorzugsweise am zweiten Wärmeübertrager (10) ausgebildet ist.

4. Befestigungseinrichtung nach Anspruch 2 oder 3,
**dadurch gekennzeichnet,**
**dass** der Steckbolzen (51) im Querschnitt eine kreisförmige Grundform aufweist, welche insbesondere an zwei einander gegenüberliegenden Seiten abgeflacht ist.

5. Befestigungseinrichtung nach einem der vorangegangenen Ansprüche,
**dadurch gekennzeichnet,**
**dass** die Befestigungseinrichtung (50) ein Wirkmittel aufweist, das eine in Vertikalrichtung wirkende Vorspannung zwischen Aufnahme (15) und Befestigungsmittel erzeugt.

6. Befestigungseinrichtung nach Anspruch 5,
**dadurch gekennzeichnet,**
**dass** das Wirkmittel ein auf einen Steckbolzen (51) einwirkender Kraftspeicher ist, wobei der Kraftspeicher insbesondere eine Feder, vorzugsweise eine einseitig gehaltene, mit dem freien Ende am Steckbolzen abgestützte Blattfeder (17) ist.

7. Befestigungseinrichtung nach einem der vorangegangenen Ansprüche,
**dadurch gekennzeichnet,**
**dass** wenigstens ein Teil und insbesondere alle der Bauteile aus Aufnahme (15), Befestigungsmittel, Steckbolzen (51), Haltemutter (52) und Kraftspeicher zumindest überwiegend aus einem Kunststoff bestehen.

8. Wärmeübertragerbefestigung nach Anspruch 1,
**dadurch gekennzeichnet,**
**dass** wenigstens die eine Relativbewegung ermöglichende Befestigungseinrichtung (50) ein Wirkmittel aufweist, das eine in Vertikalrichtung wirkende Vorspannung zwischen Aufnahme (15) und Befestigungsmittel erzeugt.

## Claims

1. Fixing device (50) for a first heat exchanger (40), in particular an intercooler, installed below a second heat exchanger, in particular a coolant cooler (10), wherein the first heat exchanger (40) is held below the second heat exchanger (10) by fixing means (50), wherein the second heat exchanger (10) is provided with a suitable location (15) for this purpose, wherein a location (15) is formed in the lower region of the second heat exchanger (20), wherein fixing means (50) are formed in the upper region of the first heat exchanger (40), wherein the first heat exchanger (40) is suspended from the second heat exchanger (10) by establishing a connection between the location (15) and the fixing means (50), wherein corresponding elements of a fixing device (50) are provided in each horizontal side region on the first heat exchanger (40) and on the second heat exchanger (10), each representing a fixing device (50), wherein one of the two fixing devices (50) is a fixed bearing and the other fixing device (50) permits a relative movement of the first heat exchanger (40) with respect to the second heat exchanger (10) in the horizontal direction, **characterised in that** the location (15) comprises two eyes (16) designed as slots extending in the horizontal direction, the eyes (16) having a height approximately corresponding to the diameter of a lock pin (51) and extending in the horizontal direction in a manner required for a play compensation of a longitudinal dimension.

2. Fixing device according to any of the preceding claims,
**characterised in that**
the location (15) of the second heat exchanger (10) is designed to accommodate a lock pin (51), wherein the fixing means (50) of the first heat exchanger (40) are likewise suited to accommodate a lock pin (51), the connection being established by passing a lock pin (51) through the location (15) and the fixing means (50) aligned relative to each other.

3. Fixing device according to claim 2,
**characterised in that**
the lock pin (51) has a thread in its axial dimension which engages a corresponding mating thread and prevents a break of the connection, the mating thread being in particular designed as a retaining nut (52) preferably provided on the second heat exchanger (10).

4. Fixing device according to claim 2 or 3,
**characterised in that**
the lock pin (51) has a circular basic shape in cross-section, which is in particular flattened on two opposite sides.

5. Fixing device according to any of the preceding claims,
**characterised in that**
the fixing device (50) comprises effective means for producing a preload acting in the vertical direction between the location (15) and the fixing means.

6. Fixing device according to claim 5,
**characterised in that**
the effective means are represented by an energy storage device acting on a lock pin (51), the energy storage device being in particular a spring, preferably a cantilever leaf spring (17) supported on the lock pin at its free end.

7. Fixing device according to any of the preceding claims,
**characterised in that**
at least some and in particular all of the components including the location (15), the fixing means, the lock pin (51), the retaining nut (52) and the energy storage device are at least largely made of plastic.

8. Heat exchanger fixing according to claim 1,
**characterised in that**
at least the fixing device (50) permitting a relative movement comprises effective means for producing a preload acting in the vertical direction between the location (15) and the fixing means.

## Revendications

1. Dispositif de fixation (50) pour un premier échangeur de chaleur (40), en particulier un refroidisseur d'air de suralimentation, au-dessous d'un deuxième échangeur de chaleur, en particulier d'un radiateur à liquide de refroidissement (10), où le premier échangeur de chaleur (40) est fixé au-dessous du deuxième échangeur de chaleur (10), par des moyens de fixation (50), où le deuxième échangeur de chaleur (10) présente, pour ce faire, un logement correspondant (15), où un logement (15) est configuré dans la zone inférieure du deuxième échangeur de chaleur (10), où des moyens de fixation (50) sont configurés dans la zone supérieure du premier échangeur de chaleur (40) où, par réalisation d'un assemblage entre le logement (15) et les moyens de fixation (50), le premier échangeur de chaleur (40) est accroché au deuxième échangeur de chaleur (10), où des éléments correspondants de chaque dispositif de fixation (50) sont configurés sur le premier échangeur de chaleur (40) et sur le deuxième échangeur de chaleur (10), à chaque fois sur les deux zones latérales horizontales et, ainsi, forment à chaque fois un dispositif de fixation (50), où l'un des deux dispositifs de fixation (50) est un palier fixe, et l'autre dispositif de fixation (50) permet, dans le sens horizontal, un mouvement relatif du premier échangeur de chaleur (40) par rapport au deuxième échangeur de chaleur (10),
**caractérisé en ce que** le logement (15) se compose de deux billets (16) configurés comme des trous oblongs s'étendant dans le sens horizontal, où les billets (16) présentent une hauteur qui correspond à peu près au diamètre d'un axe débrochable (51) et s'étend, dans le sens horizontal, d'une manière nécessaire pour une compensation de jeu d'une dimension longitudinale.

2. Dispositif de fixation selon la revendication 1, **caractérisé en ce que** le logement (15) du deuxième échangeur de chaleur (10) est configuré pour loger un axe débrochable (51), où les moyens de fixation (50) du premier échangeur de chaleur (40) sont appropriés également pour le logement d'un axe débrochable (51), où l'assemblage peut être réalisé par le passage d'un axe débrochable (51) à travers des composants alignés les uns par rapport aux autres, tels que le logement (15) et les moyens de fixation (50).

3. Dispositif de fixation selon la revendication 2, **caractérisé en ce que** l'axe débrochable (51) présente, dans son étendue axiale, un filetage de vis qui s'engage dans un contre-filetage correspondant et empêche un desserrage de l'assemblage, où le contre-filetage est conçu en particulier dans un écrou de fixation (52) qui est configuré, de préférence, sur le deuxième échangeur de chaleur (10).

4. Dispositif de fixation selon la revendication 2 ou 3, **caractérisé en ce que** l'axe débrochable (51) présente, en section, une forme de base circulaire qui est aplatie, en particulier au niveau de deux côtés placés à l'opposé l'un de l'autre.

5. Dispositif de fixation selon l'une quelconque des revendications précédentes, **caractérisé en ce que** le dispositif de fixation (50) présente un moyen actif qui produit, entre le logement (15) et les moyens de fixation, une précontrainte s'exerçant dans le sens vertical.

6. Dispositif de fixation selon la revendication 5, **caractérisé en ce que** le moyen actif est un accumulateur de force agissant sur un axe débrochable (51), où l'accumulateur de force, en particulier un ressort, de préférence un ressort à lames (17), est retenu sur un côté et en appui sur l'axe débrochable, par l'extrémité libre.

7. Dispositif de fixation selon l'une quelconque des revendications précédentes, **caractérisé en ce qu'**au moins une partie et, en particulier, tous les composants du logement (15), des moyens de fixation, de l'axe débrochable (51), de l'écrou de fixation et de l'accumulateur de force, se composent, au moins de façon prépondérante, d'une matière plastique.

8. Fixation d'échangeur de chaleur selon la revendication 1, **caractérisé en ce qu'**au moins le dispositif de fixation (50) permettant un mouvement relatif présente un moyen actif qui produit, entre le logement (15) et les moyens de fixation, une précontrainte s'exerçant dans le sens vertical.
